# EUROPEAN PATENT APPLICATION

(11) **EP 2 312 342 A1**
(43) Date of publication of application: **20.04.2011**
(21) Application number: 10011820.7
(22) Date of filing: 29.09.2010
(51) Int. Cl.: G02B 1/04, G02B 5/18, C04B 20/00, B29D 11/00

(54) **Optical material and multilayer diffractive optical element formed with same**

(30) Priority: 19.10.2009 JP 2009240811
(71) Applicant: Canon Kabushiki Kaisha, Tokyo (JP)
(72) Inventor: Ukuda, Hideo, Tokyo (JP)
(74) Representative: Weser, Wolfgang

(57) **Abstract**

An optical material (9) includes a cured product of a resin composition at least containing indium tin oxide (ITO) fine particles and an optical resin and provides a minimum refractive index (which is a value that satisfies the relationship of dn/dλ = 0 and d²n/dλ² > 0 where n represents the refractive index, λ represents the wavelength of light, dn/dλ represents the first-order differentiated refractive index with respect to the wavelength of the light, and d²n/dλ² represents the second-order differentiated refractive index with respect to the wavelength of the light) within a wavelength range of 1600 nm or more and 1800 nm or less. The optical material has optical characteristics in which absorbance in the visible-light region is low and the second-order dispersion is low.

## Description

### BACKGROUND OF THE INVENTION

### Field of the Invention

The present invention relates to an optical material and an optical element, in particular, to an optical material that is suitable for forming an optical element used for an image pickup optical system such as a camera.

### Description of the Related Art

In existing refractive optical systems using light refraction, chromatic aberration is reduced by combining lenses composed of glass materials having different dispersion characteristics. For example, in an objective lens of a telescope or the like, a glass material having a low dispersion is used for a positive lens, a glass material having a high dispersion is used for a negative lens, and a chromatic aberration appearing on the axis is corrected by combining one or more negative lens with one or more positive lens. However, for example, when the configuration or number of lenses is limited or when the glass materials that can be used are restricted, there are cases where it is difficult to appropriately correct chromatic aberration.

To address such a problem, there is a method for suppressing chromatic aberration with a small number of lenses by using a combination of a refractive optical element having a refractive surface and a diffractive optical element having a diffraction grating.

This method uses a physical phenomenon where the directions in which chromatic aberration appears in a light beam having a certain reference wavelength at a refractive surface and a diffractive surface of the optical elements are opposite to each other. Furthermore, characteristics equivalent to those of an aspherical lens can be achieved by changing the period of a diffraction grating continuously formed in the diffractive optical element. However, one light beam having entered a diffractive optical element is divided by diffraction into a plurality of light beams of different diffraction orders. At this time, diffracted light beams of diffraction orders different from the design order form an image in a location other than that in which the image is formed by the light beam of the design order, which can cause flare.

U.S. Patent Nos. 6,262,846 and 6,912,092, both assigned to the assignee of the present application, disclose examples of the above-described method for suppressing chromatic aberration. U.S. Patent No. 6,262,846 discloses that a high diffraction efficiency can be achieved within a wide wavelength range by optimizing the refractive index dispersion of optical elements and the shape of a grating formed in the boundary surface of optical elements. By restricting the order of light beams in the used wavelength range to a specific order (hereafter, referred to as "design order"), the intensity of diffracted light beams of the other diffraction orders is reduced and flare generation is suppressed.

It is also disclosed that, to obtain a configuration having a high diffraction efficiency within a wide wavelength range, a combination of a diffractive optical element formed of a material having a relatively low refractive index dispersion and a diffractive optical element formed of a material having a high refractive index dispersion is used.

Thus, the larger the difference in refractive index dispersion between a material having a high refractive index dispersion and a material having a low refractive index dispersion, the lower the height of the gratings of the optical element configured by the materials becomes and the higher the angle of view of the optical element becomes. Therefore, to correct chromatic aberration with high accuracy, it may be necessary to use a material having a higher refractive index dispersion (lower Abbe number) and a material having a lower refractive index dispersion (higher Abbe number).

U.S. Patent No. 6,912,092 discloses an optical material having the following relationship between the refractive index (nd) at the d line and the Abbe number (νd) at the d line: nd > -6.667 × 10⁻³ νd + 1.70, and the following relationship between the second-order refractive index dispersion (θg, F) and the Abbe number (νd): θg, F ≤ - 2νd × 10⁻³ + 0.59. When these formulae are satisfied, it may be possible to increase the diffraction efficiency over the entire visible region.

In addition, the optical material in U.S. Patent No. 6,912,092 is a composite material in which a transparent conductive metal oxide having a high refractive index dispersion and a low second-order dispersion characteristic has been mixed with and dispersed, in the form of fine particles, in a binder resin. As the transparent conductive metal oxide, transparent conductive metal oxides such as ITO (Indium Tin Oxide), ATO (Antimony-doped Tin Oxide), SnO₂ (Tin Dioxide), ZnO (Zinc Oxide), and the like have been disclosed.

U.S. Patent No. 6,912,092 also describes examples of a high-refractive-index high-dispersion material in which inorganic fine particles have been dispersed in a resin. Specifically, U.S. Patent No. 6,912,092 describes, as high-refractive-index high-dispersion materials, photo-curable resin materials in which ITO fine particles have been dispersed in organic resins, the refractive index nd at the d line is in the range of 1.606 to 1.648, and the Abbe number νd at the d line is in the range of 13.3 to 22.7. U.S. Patent No. 6,912,092 also describes, as a low-refractive-index low-dispersion material, a photo-curable resin material having a refractive index nd of 1.513 at the d line and an Abbe number νd of 51.0 at the d line.

In addition, Examples of U.S. Patent No. 6,912,092 describe laminated diffractive optical elements in which a diffractive optical element composed of a high-refractive-index high-dispersion material and a diffractive optical element composed of a low-refractive-index low-dispersion material are disposed so as to face each other with a space therebetween.

In general, in an optical material in which high-refractive-index nanoparticles of an optical resin, an optical glass, TiO₂ (Titanium dioxide), or the like have been dispersed, as the refractive index dispersion increases (Abbe number νd decreases), the second-order dispersion (θgF) increases. However, as described in U.S. Patent No. 6,912,092, unlike other metal oxides, materials in which indium tin oxide (ITO) fine particles have been dispersed have characteristics in which the refractive index dispersion is high and the second-order dispersion (θgF) is low. By employing such a characteristic that the second-order dispersion (θgF) is low, in a multilayer diffractive optical element, light can be focused at an efficiency of 99% or more and chromatic aberration occurring in the lens system can be corrected. However, the optical characteristics of ITO considerably vary in accordance with the concentration of Sn (Tin) serving as a doping agent and the reduction state of ITO fine particles in the production process. Specifically, when ITO fine particles are excessively reduced, the resultant optical element has a low second-order dispersion but has a high absorbance in the visible-light region, which is problematic.

### SUMMARY OF THE INVENTION

Accordingly, at least one embodiment of the present invention discloses an optical material having optical characteristics in which the absorbance in the visible-light region is low and the second-order dispersion is low. The present invention also provides a multilayer diffractive optical element in which such an optical material is used and hence the diffraction efficiency is high and the optical absorbance can be reduced over the entire visible region.

The present invention in its first aspect provides an optical material as specified in claims 1 to 6.

The present invention in its second aspect provides a multilayer diffractive optical element as specified in claim 7.

Further features of the present invention will become apparent to persons having ordinary skill in the art from the following description of exemplary embodiments with reference to the attached drawings.

### BRIEF DESCRIPTION OF THE DRAWINGS

Fig. 1 is a schematic view illustrating a procedure by which a refractive index measurement sample is prepared.

Fig. 2 is a schematic view illustrating a procedure by which a transmittance measurement sample is prepared.

Fig. 3 is a graph illustrating the internal transmittances (for a film thickness of 10 µm) of the optical materials of EXAMPLES 1 to 4 and COMPARATIVE EXAMPLES 1 and 2.

Fig. 4 is a schematic view illustrating a procedure by which a spectropolarimetric analysis sample is prepared.

Fig. 5 is a graph illustrating the spectropolarimetric analysis results of optical materials A-1 and A-2.

Fig. 6 is a graph illustrating the spectropolarimetric analysis results of optical materials B-1, B-2, B-3, B-4, and C-1.

Fig. 7 is a graph illustrating the internal transmittances (for a film thickness of 10 µm) of the optical material A-2 of EXAMPLE 5.

Fig. 8 is a schematic view illustrating the configuration of a multilayer diffraction grating in a multilayer diffractive optical element according to an embodiment of the present invention.

Fig. 9 is a graph illustrating the transmittances of the multilayer diffraction gratings of EXAMPLE 6 and COMPARATIVE EXAMPLE 3.

Fig. 10 is a graph illustrating the diffraction efficiency of the multilayer diffraction grating of EXAMPLE 6.

Fig. 11 is a graph illustrating the diffraction efficiency of the multilayer diffraction grating of COMPARATIVE EXAMPLE 3.

### DESCRIPTION OF THE EMBODIMENTS

Hereinafter, embodiments according to the present invention will be described.

### Optical material

As described above, optical characteristics of indium tin oxide (ITO) fine particles considerably vary in accordance with the concentration of Sn serving as a doping agent and the reduction state of the fine particles in the production process. Specifically, when the reduction proportion is low, the second-order dispersion value is high; and when the reduction proportion is high, the transmittance of the optical element is low. However, it is very difficult to measure the reduction proportion of fine particles and it is difficult to directly control the reduction proportion. In the present invention, the reduction proportion can be defined with the wavelength of light that provides the minimum value of a refractive index, the wavelength being in correlation with the reduction proportion.

An optical material according to an embodiment of the present invention includes a cured product of a resin composition at least containing indium tin oxide (ITO) fine particles, an optical resin, a dispersing agent, and the like; and the optical material has the minimum refractive index in the wavelength range of 1600 nm or more and 1800 nm or less. The minimum refractive index in an embodiment of the present invention satisfies the following relationship: dn/dλ = 0 and d²n/dλ² > 0 where n represents a refractive index and λ represents the wavelength of light. When such a configuration is employed, an optical material having optical characteristics in which absorbance in the visible-light region is low and the second-order dispersion is low can be provided.

When comparison is performed between optical materials having the same concentration of indium tin oxide (ITO) fine particles and including the same optical resin, when the minimum refractive index (dn/dλ = 0 and d²n/dλ² > 0) is present in the range of wavelengths shorter than 1600 nm, the Abbe number (νd) and the second-order dispersion (θgF) are low, whereas the absorbance in the visible region sharply increases, in particular, in the long wavelength range.

When the minimum refractive index (dn/dλ = 0 and d²n/dλ² > 0) is present in the range of wavelengths longer than 1800 nm, the Abbe number (νd) and the second-order dispersion (θgF) are high, the Burstein-Moss effect is not exerted, and the absorbance in the short wavelength range sharply increases.

The average particle size of indium tin oxide (ITO) fine particles is desirably 3 nm or more and 60 nm or less. When the average particle size is more than 60 nm, the degree of light scattering increases. As for indium tin oxide (ITO) fine particles, it is desired that the proportion of tin atoms with respect to the total of indium atoms and tin atoms be 3% or more and 15% or less and preferably 5% or more and 10% or less. In the case where the proportion of tin atoms is less than 3%, even when the reduction proportion of the fine particles is increased, the second-order dispersion value of the optical material cannot be made low. When the proportion of tin atoms is more than 15%, the crystallinity of indium tin oxide (ITO) fine particles decreases and the absorbance in the visible-light region increases.

The reduction proportion of indium tin oxide (ITO) fine particles is controlled by adjusting the reducing atmosphere. To adjust the reducing atmosphere, at least one parameter among temperature for reduction, the concentration of a reducing gas, time, and the like is adjusted. A wavelength value that provides the minimum value of a refractive index can be used as a substitute for the reduction proportion of indium tin oxide (ITO) fine particles.

It is desired that the content of indium tin oxide (ITO) fine particles contained in the optical material be a volume fraction of 5% or more and 25% or less and preferably a volume fraction of 7% or more and 20% or less. When the volume fraction is less than 5%, the Abbe number becomes a high value of 30 or more and the second-order dispersion (θgF) becomes a high value of 0.48 or more and optical characteristics of the optical material are degraded. When the volume fraction is more than 25%, the degree of light scattering increases and the material is not suitable as optical material.

An optical resin used in an embodiment according to the present invention is a resin that is composed of monomers or oligomers that are at least curable by energy. In consideration of imparting a shape to the surface of a glass lens as an optical element, the energy for curing is desirably ultraviolet (UV) light. Examples of such a resin include acrylic resins, fluorocarbon resins, and silicone resins. The refractive index of general optical resins with respect to the d line is in the range of 1.29 or more and 1.70 or less. It is desired that the content of such an optical resin contained in the optical material be a volume fraction of 35% or more and 95% or less and preferably a volume fraction of 50% or more and 90% or less.

A dispersing agent used in an embodiment according to the present invention is used to disperse indium tin oxide (ITO) fine particles. As the dispersing agent, a cationic surfactant, a weak cationic surfactant, a nonionic surfactant, or an amphoteric surfactant is effective. In particular, a polyester agent, an ε-caprolactone agent, polycarboxylate, polyphosphate, hydrostearate, amide sulfonate, polyacrylate, an olefin-maleate copolymer, an acrylic-maleate copolymer, an alkylamine acetate, an alkyl fatty acid salt, fatty acid polyethylene glycol ether, a silicone agent, or a fluorocarbon agent may be used. In an embodiment according to the present invention, at least one basic agent selected from ammonia and organic amines is desirably used. Specific examples include DISPERBYK 161, 162, 163, and 164 in DISPERBYK series (manufactured by BYK Japan KK); Solsperse 3000, 9000, 17000, 20000, 24000, and 41090 in Solsperse series (manufactured by Zeneca Inc.); and PO or EO modified products of alkylamines such as TAMN-15 in TAMN series (manufactured by Nikko Chemicals Co., Ltd.). It is desired that the content of such a dispersing agent be a volume fraction of 4% or more and 40% or less and preferably a volume fraction of 5% or more and 30% or less.

### Multilayer diffractive optical element

Hereinafter, a multilayer diffractive optical element according to an embodiment of the present invention will be described. A multilayer diffractive optical element according to an embodiment of the present invention is used for correction of chromatic aberration of the lens group of a camera or a video camera. In a multilayer diffractive optical element according to an embodiment of the present invention, a first optical element layer including a diffraction grating structure at least in its surface and a second optical element layer including a diffraction grating structure at least on one side are stacked on a surface of a transparent substrate such that the diffraction grating structures face each other; and an optical material forming the first optical element layer has a higher refractive index and a lower dispersion than an optical material forming the second optical element layer. The above-described optical material according to an embodiment of the present invention is used as one of the optical materials of a multilayer diffractive optical element for correction of chromatic aberration.

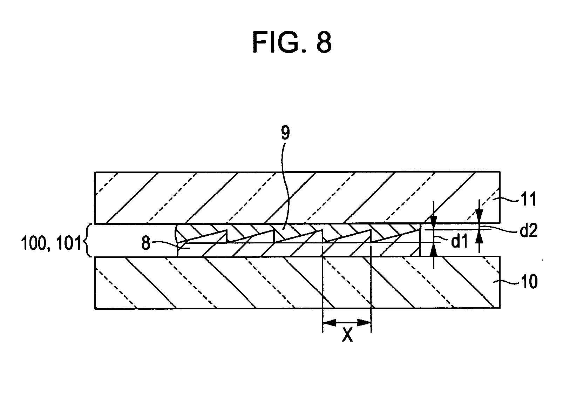

Fig. 8 is a schematic view illustrating an exemplary configuration of the multilayer diffraction grating of a multilayer diffractive optical element according to an embodiment of the present invention. The multilayer diffraction grating is referenced by numeral 100 in EXAMPLE 6 and by numeral 101 in COMPARATIVE EXAMPLE 3. In Fig. 8, the multilayer diffraction grating 100/101 of a multilayer diffractive optical element includes a first layer composed of a material 8 that has a high refractive index and a low dispersion and a second layer composed of a material 9 that has a low refractive index and a high dispersion. The first and second layers are stacked onto each other (without a gap therebetween) and contained between glass substrate 10 and glass substrate 11, which are transparent substrates. Each of the first layer and the second layer respectively includes a first grating structure and a second grating structure formed on a surface thereon, such that the diffraction grating structures of the layers face each other. An optical material according to an embodiment or an example of the present invention is used for the second layer of the multilayer optical element. Thus, as stated above, the second layer is composed of a material 9 that has a low refractive index and a high dispersion. More specifically, in accordance with at least one embodiment or example of the present invention, the material 9 of second layer preferably includes an optical resin and ITO fine particles dispersed in the optical resin. As described in the below-described examples, the optical resin in the optical material 9 is desirably an optical resin having a relatively low refractive index (nd = 1.29 to 1.51) and high dispersion, such as a fluorocarbon resin, a silicone resin, PMMA, or the like. As the material 8 for the first layer, any known optical material can be selected as long as the optical material of the first layer has higher refractive index and lower dispersion than the optical material of the second layer.

### EXAMPLES

Hereinafter, examples according to the present invention will be described. However, these examples do not restrict the scope of the present invention.

### EXAMPLE 1

### Indium tin oxide (ITO) fine particles

In examples according to the present invention, three lots of unreduced indium tin oxide (ITO) fine particles produced under the same conditions were prepared. These three lots were defined as lot A, lot B, and lot C.

Portions of the lot A, the lot B, and the lot C of indium tin oxide (ITO) fine particles were taken and measured in terms of tin concentration with an ICP optical emission spectrometer (SPS4000, manufactured by SII NanoTechnology Inc.). The proportions of tin atoms with respect to the total of the tin atoms and indium atoms were 9.8 atom% for the lot A, 8.0 atom% for the lot B, and 6.80 atom% for the lot C. The specific surfaces of the fine particles were also measured by the BET method on the basis of the absorption amount of nitrogen. The specific surfaces were 54 m²/g for the lot A, 52 m²/g for the lot B, and 54 m²/g for the lot C.

The unreduced indium tin oxide (ITO) fine particles (lot A) were reduced with a small tube furnace under firing conditions (temperature: 300°C, atmosphere gas (H₂:N₂ = 2:98), pressure: 1 atmospheric pressure (1.0 Pa), and 200 minutes). Hereafter, the thus-reduced indium tin oxide (ITO) fine particles are referred to as A-1-ITO fine particles.

A portion of the A-1-ITO fine particles was taken and measured in terms of tin concentration with an ICP optical emission spectrometer (SPS4000, manufactured by SII NanoTechnology Inc.). The proportion of tin atoms with respect to the total of the tin atoms and indium atoms was 9.8 atom%. The specific surface of the A-1-ITO fine particles was also measured by the BET method on the basis of the absorption amount of nitrogen. The specific surface was 53 m²/g and an average particle size was 17 nm.

### Preparation of optical material A-1

The A-1-ITO fine particles and DISPERBYK 164 (manufactured by BYK Japan KK) serving as a dispersing agent were compatibly dispersed in a xylene solution. As a result, an ITO-fine-particle-dispersed xylene solution (A-1-1) containing xylene as a solvent was provided.

A portion of the ITO-fine-particle-dispersed xylene solution (A-1-1) was taken and the solvent was removed from the portion with an evaporator. The resultant solid content was measured in terms of the concentration of the fine particles and the concentration of the dispersing agent with a thermogravimetric analyzer (Pyris 1 TGA, manufactured by PerkinElmer, Inc.). The concentration of the fine particles was 5.23 w% and the concentration of the dispersing agent was 0.94 w%. The ITO-fine-particle-dispersed xylene solution (A-1-1) was measured with a particle size distribution analyzer (dynamic light scattering Zetasizer Nano, manufactured by SYSMEX CORPORATION). As a result, the average particle size was 31 nm.

As an ultraviolet-curable acrylic resin, a mixture of 13 w% polyester acrylate, 20 w% tris(2-acryloxyethyl)isocyanurate, 25 w% pentaerythritol triacrylate, 40 w% dicyclopentenyloxyethylmethacrylate, and 2 w% 1-hydroxycyclohexylphenyl ketone. Hereafter, this ultraviolet-curable acrylic resin is referred to as ultraviolet-curable resin I. The cured optical resin had a refractive index nd = 1.528, νd = 51.1, and θgF = 0.56.

Then, 8.69 g of the ultraviolet-curable resin I was mixed with 180.50 g of the ITO-fine-particle-dispersed xylene solution (A-1-1). The resultant mixture was charged into an evaporator at 45°C and at 100 hectopascals and the pressure of the evaporator was gradually decreased to finally 2 hectopascals. The xylene solvent was sufficiently evaporated over 12 hours. Thus, an optical material A-1 was prepared.

### Evaluation of optical material A-1

### (1) Measurement of proportion of ITO fine particles

The weight fraction of indium tin oxide (ITO) fine particles was measured on the basis of the amount of inorganic oxides remained after heating up to 500°C in an air atmosphere with the thermogravimetric analyzer (Pyris 1 TGA, manufactured by PerkinElmer, Inc.). After that, the volume fraction was calculated with specific gravity (ITO: 6.70, dispersing agent: 1.14, and ultraviolet-curable resin I: 1.27). The proportion of the ITO fine particles in the optical material A-1 was a weight fraction of 47.2 w% and it was a volume fraction of 14.2 v%.

### (2) Measurement of refractive index

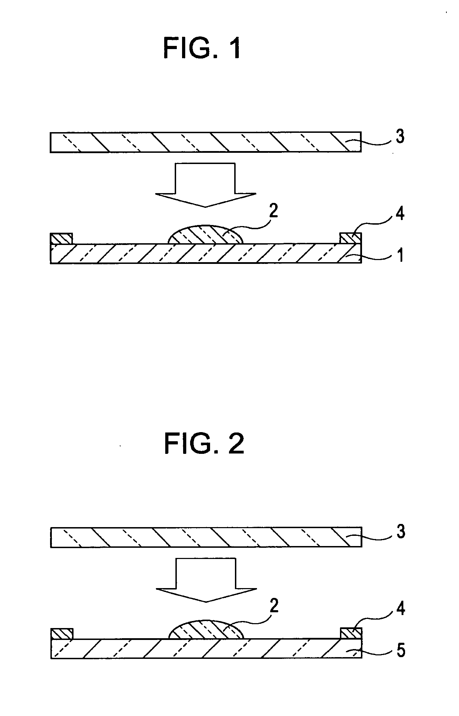

The refractive index of optical elements was measured with samples prepared in the following manner. Referring to Fig. 1, a spacer 4 having a thickness of 12.5 µm and a sample 2 (optical material A-1) were placed on a high-refractive-index glass 1 having a thickness of 1 mm.
A synthetic quartz plate 3 having a thickness of 1 mm was then placed on the high-refractive-index glass 1 with the spacer 4 therebetween such that the sample 2 (optical material A-1) was pressed and made spread. The thus-spread sample 2 was irradiated with a high-pressure mercury-vapor lamp (EXECURE250, manufactured by HOYA CANDEO OPTRONICS CORPORATION) under conditions of 20 mW/cm² and 1000 seconds. Thus, a refractive index measurement sample in which the optical material A-1 had been cured was prepared.

The refractive index measurement sample of the optical material A-1 was measured with a refractometer (KPR-30, manufactured by SHIMADZU CORPORATION) in terms of refractive index (ng) of the g line (435.8 nm), refractive index (nF) of the F line (486.1 nm), refractive index (nd) of the d line (587.6 nm), and refractive index (nC) of the C line (656.3 nm). In addition, the Abbe number (νd) and the second-order dispersion (θgF) were calculated with formulae below from the measured refractive indices. Definition of Abbe number: νd = (nd - 1) / (nF - nC) (1) Second-order dispersion: θgF = (ng - nF)/(nF - nC) (2)

The results are summarized in Table 1 below. Optical characteristics of the optical material A-1 were (nd, νd, θgF) = (1.565, 20.9±0.2, 0.42±0.02). Thus, the Abbe number (νd) and the second-order dispersion (θgF) were low.

### (3) Measurement of transmittance

Referring to Fig. 2, the spacer 4 having a thickness of 12.5 µm and the sample 2 (optical material A-1) were placed on a glass substrate 5 having a thickness of 1 mm. The synthetic quartz plate 3 having a thickness of 1 mm was then placed on the sample 2 such that the sample 2 (optical material A-1) was pressed and made spread. The thus-spread sample 2 was irradiated with the high-pressure mercury-vapor lamp (EXECURE250, manufactured by HOYA CANDEO OPTRONICS CORPORATION) under conditions of 20 mW/cm² and 1000 seconds to thereby cure the sample 2. After that, the synthetic quartz plate 3 was removed. Thus, a transmittance measurement sample of the optical material A-1 was prepared. This transmittance measurement sample was measured with a spectrophotometer (U4000, manufactured by Hitachi, Ltd.) in terms of transmittance in the wavelength range of 400 nm to 700 nm in 10 nm steps. After that, the film thickness was measured and an attenuation coefficient k was determined. Then, the transmittances were converted to internal transmittances for a film thickness of 10 µm.

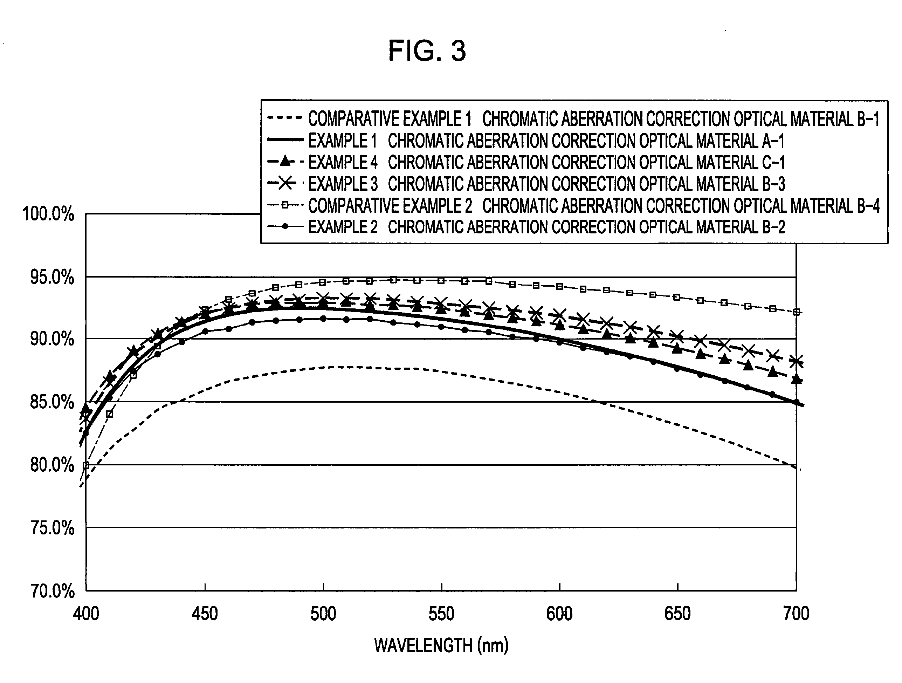

Fig. 3 illustrates the internal transmittances of the optical material A-1 for a film thickness of 10 µm. Specific values of the internal transmittances at the wavelengths of 700 nm, 500 nm, and 400 nm are summarized in Table 1 below. The transmittance (λ = 700 nm) was 84.9%; the transmittance (λ = 500 nm) was 92.5%; and the transmittance (λ = 400 nm) was 82.5%. Thus, the transmittances were 81% or more in the entirety of the region and the transmittances were good.

### (4) Measurement of wavelength that provides the minimum value of refractive index

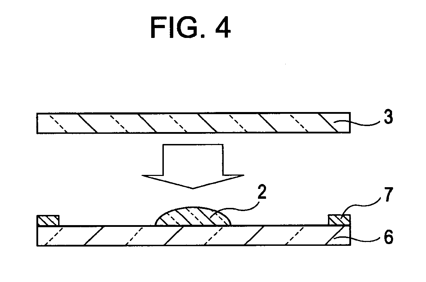

Referring to Fig. 4, a spacer 7 having a thickness of 50 µm and the sample 2 (optical material A-1) were placed on a glass substrate 6 whose thickness was 1 mm and two surfaces had been roughened so as to be made nonreflective. The synthetic quartz plate 3 having a thickness of 1 mm was then placed on the sample 2 such that the sample 2 (optical material A-1) was pressed and made spread. The thus-spread sample 2 was irradiated with the high-pressure mercury-vapor lamp (EXECURE250, manufactured by HOYA CANDEO OPTRONICS CORPORATION) under conditions of 20 mW/cm² and 1000 seconds to thereby cure the sample 2. After that, the synthetic quartz plate 3 was removed. Thus, a spectropolarimetric analysis sample of the optical material A-1 was prepared.

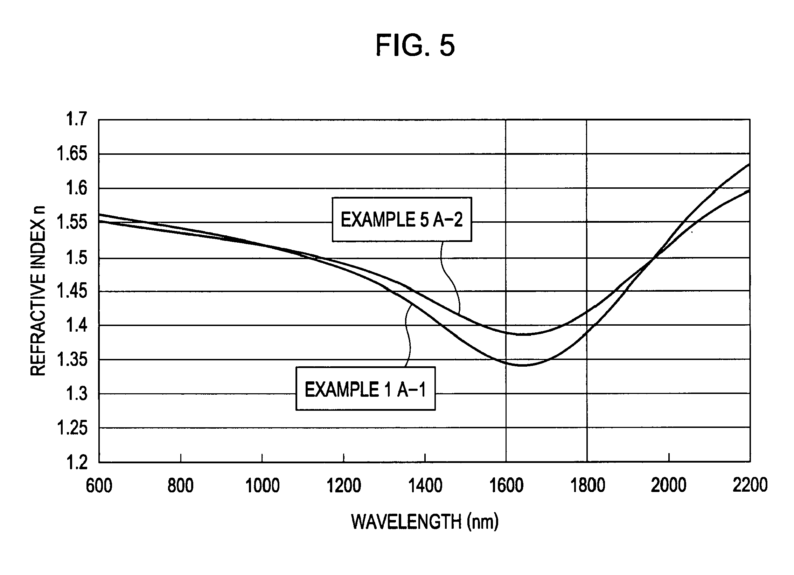

The spectropolarimetric analysis sample was measured with a spectroscopic ellipsometer (VASE manufactured by J. A. Woollam Co., Inc.) in a wavelength range of 600 nm to 2200 nm. Then, refractive indices at these wavelengths were calculated. The analytic results are illustrated in Fig. 5. The wavelength at which the refractive index value was the lowest was determined with the graph in Fig. 5. The result is illustrated in Table 1 below. This wavelength was 1638 nm, which was within the range of 1600 nm or more and 1800 nm or less. The minimum value of the refractive index was 1.342.

### COMPARATIVE EXAMPLE 1

### Reduction of ITO fine particles

Unreduced indium tin oxide (ITO) fine particles (lot B, which was different from that in EXAMPLE 1) were reduced with a small tube furnace under the same firing conditions (temperature: 300°C, atmosphere gas (H₂:N₂ = 2:98), pressure: 1 atmospheric pressure (1.0 Pa), and 200 minutes) as in EXAMPLE 1. Hereafter, the thus-reduced indium tin oxide (ITO) fine particles are referred to as B-1-ITO fine particles.

A portion of the B-1-ITO fine particles was taken and measured in terms of tin concentration with the ICP optical emission spectrometer (SPS4000, manufactured by SII NanoTechnology Inc.). The proportion of tin atoms with respect to the total of the tin atoms and indium atoms was 8.0 atom%.

### Measurement of particle size

The specific surface of the B-1-ITO fine particles was measured by the BET method on the basis of the absorption amount of nitrogen. The specific surface was 51 m²/g. The average particle size was estimated to be 17.5 nm.

### Preparation of optical material B-1

The B-1-ITO fine particles were compatibly dispersed in the same manner as in EXAMPLE 1. As a result, an ITO-fine-particle-dispersed xylene solution (B-1-1) containing xylene as a solvent was provided.

A portion of the ITO-fine-particle-dispersed xylene solution (B-1-1) was taken and measurement was performed in terms of the concentration of the fine particles and the concentration of the dispersing agent in the same manner as in EXAMPLE 1. The concentration of the fine particles was 5.30 w% and the concentration of the dispersing agent was 0.99 w%. The ITO-fine-particle-dispersed xylene solution (B-1-1) was measured with the particle size distribution analyzer (dynamic light scattering Zetasizer Nano, manufactured by SYSMEX CORPORATION). As a result, the average particle size was 30 nm.

Then, 8.74 g of the ultraviolet-curable resin I prepared in EXAMPLE 1 was mixed with 191.44 g of the ITO-fine-particle-dispersed xylene solution (B-1-1). An optical material B-1 was then prepared in the same manner as in EXAMPLE 1.

### Evaluation of optical material B-1

### (1) Measurement of proportion of ITO fine particles

The proportion of indium tin oxide (ITO) fine particles in the optical material B-1 was measured in the same manner as in EXAMPLE 1. The proportion in the optical material B-1 was a weight fraction of 47.3 w% and it was a volume fraction of 14.3 v%.

### (2) Measurement of refractive index

A refractive index measurement sample was prepared in the same manner as in EXAMPLE 1. The sample was measured in terms of refractive indices and the optical characteristics were determined in the same manner as in EXAMPLE 1. The results are illustrated in Table 1 below. The optical characteristics of the optical material B-1 were (nd, νd, θgF) = (1.565, 20.2±0.2, 0.42±0.02). Thus, the Abbe number (νd) was slightly lower than that in EXAMPLE 1 and the second-order dispersion (θgF) characteristic was substantially equivalent to that in EXAMPLE 1.

### (3) Measurement of transmittance

A transmittance measurement sample was prepared and measured in the same manner as in EXAMPLE 1. The internal transmittances of the optical material B-1 for a film thickness of 10 µm were determined from the transmittances and the film thickness. Fig. 3 illustrates the results. Specific values of the internal transmittances at the wavelengths of 700 nm, 500 nm, and 400 nm are summarized in Table 1 below. The transmittance (λ = 700 nm) was 79.8%; the transmittance (λ = 500 nm) was 87.8%; and the transmittance (λ = 400 nm) was 78.9%. Thus, the transmittances were lower than those in EXAMPLE 1 by 5.2%, 4.7%, and 3.6%.

### (4) Measurement of wavelength that provides the minimum value of refractive index

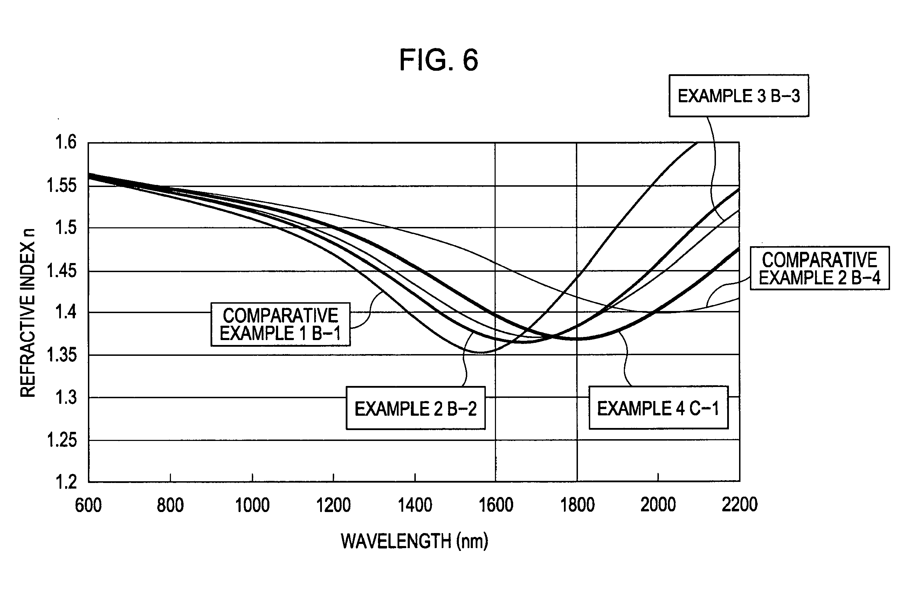

A spectropolarimetric analysis sample of the optical material B-1 was prepared and the refractive indices of the sample in a long wavelength range of 600 nm to 2200 nm were calculated in the same manner as in EXAMPLE 1. The results are illustrated in Fig. 6. The wavelength at which the refractive index value was the lowest was determined with the graph in Fig. 6. The result is illustrated in Table 1 below. This wavelength was 1565 nm, which was on the shorter wavelength side of the range of 1600 nm or more and 1800 nm or less. When the wavelength of the minimum refractive index (dn/dλ = 0 and d²n/dλ² > 0) is within the range of wavelengths shorter than 1600 nm, the absorbance sharply increases. The minimum value of the refractive index was 1.353.

### EXAMPLE 2

### Reduction of ITO fine particles

Unreduced indium tin oxide (ITO) fine particles (lot B, which was the same as in COMPARATIVE EXAMPLE 1) were reduced with a small tube furnace under firing conditions (temperature: 300°C, atmosphere gas (H₂:N₂ = 2:98), pressure: 1 atmospheric pressure (1.0 Pa), and 140 minutes) in which the firing time was shorter than the time in EXAMPLE 1 and COMPARATIVE EXAMPLE 1. Hereafter, the thus-reduced indium tin oxide (ITO) fine particles are referred to as B-2-ITO fine particles.

A portion of the B-2-ITO fine particles was taken and measured in terms of tin concentration with the ICP optical emission spectrometer (SPS4000, manufactured by SII NanoTechnology Inc.). The proportion of tin atoms with respect to the total of the tin atoms and indium atoms was 8.0 atom%. The specific surface of the B-2-ITO fine particles was also measured by the BET method on the basis of the absorption amount of nitrogen. The specific surface was 52 m²/g. The average particle size was 17.3 nm.

### Preparation of optical material B-2

The B-2-ITO fine particles were compatibly dispersed in the same manner as in EXAMPLE 1. As a result, an ITO-fine-particle-dispersed xylene solution (B-2-1) containing xylene as a solvent was provided.

A portion of the ITO-fine-particle-dispersed xylene solution (B-2-1) was taken and measurement was performed in terms of the concentration of the fine particles and the concentration of the dispersing agent in the same manner as in EXAMPLE 1. The concentration of the fine particles was 4.96 w% and the concentration of the dispersing agent was 0.77 w%. The ITO-fine-particle-dispersed xylene solution (B-2-1) was measured with the particle size distribution analyzer (dynamic light scattering Zetasizer Nano, manufactured by SYSMEX CORPORATION). As a result, the average particle size was 30 nm.

Then, 9.00 g of the ultraviolet-curable resin I prepared in EXAMPLE 1 was mixed with 190.51 g of the ITO-fine-particle-dispersed xylene solution (B-2-1). An optical material B-2 was then prepared in the same manner as in EXAMPLE 1.

### Evaluation of optical material B-2

### (1) Measurement of proportion of ITO fine particles

The proportion of indium tin oxide (ITO) fine particles in the optical material B-2 was measured in the same manner as in EXAMPLE 1. The proportion in the optical material B-2 was a weight fraction of 47.2 w% and it was a volume fraction of 14.2 v%.

### (2) Measurement of refractive index

A refractive index measurement sample was prepared in the same manner as in EXAMPLE 1. The sample was measured in terms of refractive indices and the optical characteristics were determined in the same manner as in EXAMPLE 1. The results are summarized in Table 1 below. The optical characteristics of the optical material B-2 were (nd, νd, θgF) = (1.568, 20.8±0.2, 0.42±0.02). Thus, the optical material B-2 exhibited a dispersion characteristic and a second-order dispersion characteristic that were substantially equivalent to those in EXAMPLE 1.

### (3) Measurement of transmittance

A transmittance measurement sample was prepared and measured in the same manner as in EXAMPLE 1. The internal transmittances of the optical material B-2 for a film thickness of 10 µm were determined from the transmittances and the film thickness. Fig. 3 illustrates the results. Specific values of the internal transmittances at the wavelengths of 700 nm, 500 nm, and 400 nm are summarized in Table 1 below. The transmittance (λ = 700 nm) was 85.1%; the transmittance (λ = 500 nm) was 91.7%; and the transmittance (λ = 400 nm) was 82.6%. Thus, the optical characteristics were similar to those in

### EXAMPLE 1.

### (4) Measurement of wavelength that provides the minimum value of refractive index

A spectropolarimetric analysis sample of the optical material B-2 was prepared and the refractive indices of the sample in a long wavelength range of 600 nm to 2200 nm were calculated in the same manner as in EXAMPLE 1. The results are illustrated in Fig. 6. The wavelength at which the refractive index value was the lowest was determined with the graph in Fig. 6. The result is illustrated in Table 1 below. This wavelength was 1663 nm, which was within the range of 1600 nm or more and 1800 nm or less and was equivalent to 1638 nm in EXAMPLE 1. The minimum value of the refractive index was 1.365.

### EXAMPLE 3

### Reduction of ITO fine particles

Unreduced indium tin oxide (ITO) fine particles (lot B, which was the same as in COMPARATIVE EXAMPLE 1) were reduced with a small tube furnace under firing conditions (temperature: 300°C, atmosphere gas (H₂:N₂ = 2:98), pressure: 1 atmospheric pressure (1.0 Pa), and 120 minutes) in which the firing time was shorter than the firing time in EXAMPLE 2. Hereafter, the thus-reduced indium tin oxide (ITO) fine particles are referred to as B-3-ITO fine particles.

### Measurement of Sn concentration

A portion of the B-3-ITO fine particles was taken and measured in terms of tin concentration with the ICP optical emission spectrometer (SPS4000, manufactured by SII NanoTechnology Inc.). The proportion of tin atoms with respect to the total of the tin atoms and indium atoms was 8.0 atom%. The specific surface of the B-3-ITO fine particles was also measured by the BET method on the basis of the absorption amount of nitrogen. The specific surface was 53 m²/g The average particle size was 17 nm.

### Preparation of optical material B-3

The B-3-ITO fine particles were compatibly dispersed in the same manner as in EXAMPLE 1. As a result, an ITO-fine-particle-dispersed xylene solution (B-3-1) containing xylene as a solvent was provided. A portion of the ITO-fine-particle-dispersed xylene solution (B-3-1) was taken and measurement was performed in terms of the concentration of the fine particles and the concentration of the dispersing agent in the same manner as in EXAMPLE 1. The concentration of the fine particles was 4.93 w% and the concentration of the dispersing agent was 0.77 w%. The ITO-fine-particle-dispersed xylene solution (B-3-1) was measured with the particle size distribution analyzer (dynamic light scattering Zetasizer Nano, manufactured by SYSMEX CORPORATION). As a result, the average particle size was 30 nm.

Then, 9.02 g of the ultraviolet-curable resin I prepared in EXAMPLE 1 was mixed with 192.66 g of the ITO-fine-particle-dispersed xylene solution (B-3-1). An optical material B-3 was then prepared in the same manner as in EXAMPLE 1.

### Evaluation of optical material B-3

### (1) Measurement of proportion of ITO fine particles

The proportion of indium tin oxide (ITO) fine particles in the optical material B-3 was measured in the same manner as in EXAMPLE 1. The proportion in the optical material B-3 was a weight fraction of 47.2 w% and it was a volume fraction of 14.2 v%.

### (2) Measurement of refractive index

A refractive index measurement sample was prepared in the same manner as in EXAMPLE 1. The sample was measured in terms of refractive indices and the optical characteristics were determined in the same manner as in EXAMPLE 1. The results are summarized in Table 1 below. The optical characteristics of the optical material B-3 were (nd, νd, θgF) = (1.569, 21.8±0.2, 0.43±0.02). Thus, νd was +1 higher than that in EXAMPLE 2 and θgF was +0.01 higher than that in EXAMPLE 2. Thus, the Abbe number (νd) and the second-order dispersion (θgF) were slightly higher than those in EXAMPLE 2.

### (3) Measurement of transmittance

A transmittance measurement sample was prepared and measured in the same manner as in EXAMPLE 1. The internal transmittances of the optical material B-3 for a film thickness of 10 µm were determined from the transmittances and the film thickness. Fig. 3 illustrates the results. Specific values of the internal transmittances at the wavelengths of 700 nm, 500 nm, and 400 nm are summarized in Table 1 below. The transmittance (λ = 700 nm) was 88.3%; the transmittance (λ = 500 nm) was 93.4%; and the transmittance (λ = 400 nm) was 83.7%. Thus, the transmittances were higher than those in EXAMPLE 2 by 3.3%, 0.9%, and 1.2%.

### (4) Measurement of wavelength that provides the minimum value of refractive index

A spectropolarimetric analysis sample of the optical material B-3 was prepared and the refractive indices of the sample in a long wavelength range of 600 nm to 2200 nm were calculated in the same manner as in EXAMPLE 1. The results are illustrated in Fig. 6. The wavelength at which the refractive index value was the lowest was determined with the graph in Fig. 6. The result is illustrated in Table 1 below. This wavelength was 1793 nm, which was within the range of 1600 nm or more and 1800 nm or less. The minimum value of the refractive index was 1.371.

### COMPARATIVE EXAMPLE 2

### Reduction of ITO fine particles

Unreduced indium tin oxide (ITO) fine particles (lot B, which was the same as in COMPARATIVE EXAMPLE 1) were reduced with a small tube furnace under firing conditions (temperature: 300°C, atmosphere gas (H₂:N₂ = 5:95), pressure: 1 atmospheric pressure (1.0 Pa), and 100 minutes) in which the firing time was further made shorter than the firing time in EXAMPLE 3. Hereafter, the thus-reduced indium tin oxide (ITO) fine particles are referred to as B-4-ITO fine particles.

A portion of the B-4-ITO fine particles was taken and measured in terms of tin concentration with the ICP optical emission spectrometer (SPS4000, manufactured by SII NanoTechnology Inc.). The proportion of tin atoms with respect to the total of the tin atoms and indium atoms was 8.0 atom%. The specific surface of the B-4-ITO fine particles was also measured by the BET method on the basis of the absorption amount of nitrogen. The specific surface was 51 m²/g The average particle size was estimated to be 17.6 nm.

### Preparation of optical material B-4

The B-4-ITO fine particles were compatibly dispersed in the same manner as in EXAMPLE 1. As a result, an ITO-fine-particle-dispersed xylene solution (B-4-1) containing xylene as a solvent was provided.

A portion of the ITO-fine-particle-dispersed xylene solution (B-4-1) was taken and measurement was performed in terms of the concentration of the fine particles and the concentration of the dispersing agent in the same manner as in EXAMPLE 1. The concentration of the fine particles was 4.99 w% and the concentration of the dispersing agent was 0.74 w%. The ITO-fine-particle-dispersed xylene solution (B-4-1) was measured with the particle size distribution analyzer (dynamic light scattering Zetasizer Nano, manufactured by SYSMEX CORPORATION). As a result, the average particle size was 29 nm.

Then, 9.06 g of the ultraviolet-curable resin I prepared in EXAMPLE 1 was mixed with 190.24 g of the ITO-fine-particle-dispersed xylene solution (B-4-1). An optical material B-4 was then prepared in the same manner as in EXAMPLE 1.

### Evaluation of optical material B-4

### (1) Measurement of proportion of ITO fine particles

The proportion of indium tin oxide (ITO) fine particles in the optical material B-4 was measured in the same manner as in EXAMPLE 1. The proportion in the optical material B-4 was a weight fraction of 47.1 w% and it was a volume fraction of 14.2 v%.

### (2) Measurement of refractive index

A refractive index measurement sample was prepared in the same manner as in EXAMPLE 1. The sample was measured in terms of refractive indices and optical characteristics were determined in the same manner as in EXAMPLE 1. The results are summarized in Table 1 below. Optical characteristics of the optical material B-4 were (nd, νd, θgF) = (1.576, 23.9±0.2, 0.46±0.02). Thus, νd was +3.1 higher than that in EXAMPLE 2 and θgF was +0.03 higher than that in EXAMPLE 2. Thus, the Abbe number (νd) and the second-order dispersion (θgF) were higher than those in EXAMPLE 2.

### (3) Measurement of transmittance

A transmittance measurement sample was prepared and measured in the same manner as in EXAMPLE 1. The internal transmittances of the optical material B-4 for a film thickness of 10 µm were determined from the transmittances and the film thickness. Fig. 3 illustrates the results. Specific values of the internal transmittances at the wavelengths of 700 nm, 500 nm, and 400 nm are summarized in Table 1 below. The transmittance (λ = 700 nm) was 92.2%; the transmittance (λ = 500 nm) was 94.7%; and the transmittance (λ = 400 nm) was 80.0%. Thus, the transmittances were higher than those in EXAMPLE 2 by 7.1% and 3.0% and, in λ = 400 nm, lower than that in EXAMPLE 2 by 2.6%. It is considered that the Burstein-Moss effect on the short wavelength side was not sufficiently exerted and the absorbance increased.

### (4) Measurement of wavelength that provides the minimum value of refractive index

A spectropolarimetric analysis sample of the optical material B-4 was prepared and the refractive indices of the sample in a long wavelength range of 600 nm to 2200 nm were calculated in the same manner as in EXAMPLE 1. The results are illustrated in Fig. 6. The wavelength at which the refractive index value was the lowest was determined with the graph in Fig. 6. The result is illustrated in Table 1 below. This wavelength was 2005 nm, which was considerably deviated from the range of 1600 nm or more and 1800 nm or less.

When the wavelength that provides the minimum refractive index (dn/dλ = 0 and d²n/dλ² > 0) is present in the range of wavelengths longer than 1800 nm, optical characteristics are degraded and the absorbance in a short wavelength range increases. The minimum value of the refractive index was 1.398.

### EXAMPLE 4

### Reduction of ITO fine particles

Unreduced indium tin oxide (ITO) fine particles (lot C, which was different from those of EXAMPLES 1 and 2) were reduced with a small tube furnace under the same firing conditions (temperature: 300°C, atmosphere gas (H₂:N₂ = 2:98), pressure: 1 atmospheric pressure (1.0 Pa), and 140 minutes) as in EXAMPLE 2. Hereafter, the thus-reduced indium tin oxide (ITO) fine particles are referred to as C-1-ITO fine particles.

A portion of the C-1-ITO fine particles was taken and measured in terms of tin concentration with the ICP optical emission spectrometer (SPS4000, manufactured by SII NanoTechnology Inc.). The proportion of tin atoms with respect to the total of the tin atoms and indium atoms was 6.8 atom%. The specific surface of the C-1-ITO fine particles was also measured by the BET method on the basis of the absorption amount of nitrogen. The specific surface was 53 m²/g. The average particle size was 17 nm.

### Preparation of optical material C-1

The C-1-ITO fine particles were compatibly dispersed in the same manner as in EXAMPLE 1. As a result, an ITO-fine-particle-dispersed xylene solution (C-1-1) containing xylene as a solvent was provided. A portion of the ITO-fine-particle-dispersed xylene solution (C-1-1) was taken and measurement was performed in terms of the concentration of the fine particles and the concentration of the dispersing agent in the same manner as in EXAMPLE 1. The concentration of the fine particles was 5.00 w% and the concentration of the dispersing agent was 0.80 w%. The ITO-fine-particle-dispersed xylene solution (C-1-1) was measured with the particle size distribution analyzer (dynamic light scattering Zetasizer Nano, manufactured by SYSMEX CORPORATION). As a result, the average particle size was 31 nm.

Then, 9.06 g of the ultraviolet-curable resin I prepared in EXAMPLE 1 was mixed with 191.72 g of the ITO-fine-particle-dispersed xylene solution (C-1-1). An optical material C-1 was then prepared in the same manner as in EXAMPLE 1.

### Evaluation of optical material C-1

### (1) Measurement of proportion of ITO fine particles

The proportion of indium tin oxide (ITO) fine particles in the optical material C-1 was measured in the same manner as in EXAMPLE 1. The proportion in the optical material C-1 was a weight fraction of 47.2 w% and it was a volume fraction of 14.2 v%.

### (2) Measurement of refractive index

A refractive index measurement sample was prepared in the same manner as in EXAMPLE 1. The sample was measured in terms of refractive indices and the optical characteristics were determined in the same manner as in EXAMPLE 1. The results are summarized in Table 1 below. The optical characteristics of the optical material C-1 were (nd, νd, θgF) = (1.568, 21.3±0.2, 0.42±0.02). Thus, the Abbe number (νd) was +0.5 higher than that in EXAMPLE 2 and slightly higher than that in EXAMPLE 2.

### (3) Measurement of transmittance

A transmittance measurement sample was prepared and measured in the same manner as in EXAMPLE 1. The internal transmittances of the optical material C-1 for a film thickness of 10 µm were determined from the transmittances and the film thickness. Fig. 3 illustrates the results. Specific values of the internal transmittances at the wavelengths of 700 nm, 500 nm, and 400 nm are summarized in Table 1 below. The transmittance (λ = 700 nm) was 86.9%; the transmittance (λ = 500 nm) was 93.0%; and the transmittance (λ = 400 nm) was 84.6%. Thus, the transmittances were higher than those in EXAMPLE 2 by 1.8%, 1.4%, and 2.0%. In particular, the transmittance (λ = 400 nm) was the highest among those of the optical materials having the same concentration (14.2 v%, EXAMPLES 1 to 4 and COMPARATIVE EXAMPLES 1 and 2).

### (4) Measurement of wavelength that provides the minimum value of refractive index

A spectropolarimetric analysis sample of the optical material C-1 was prepared and the refractive indices of the sample in a long wavelength range of 600 nm to 2200 nm were calculated in the same manner as in EXAMPLE 1. The results are illustrated in Fig. 6. The wavelength at which the refractive index value was the lowest was determined with the graph in Fig. 6. The result is illustrated in Table 1 below. This wavelength was 1698 nm, which was within the range of 1600 nm or more and 1800 nm or less and was slightly longer than 1638 nm of EXAMPLE 2. The minimum value of the refractive index was 1.368.

**Table 1**

| | Sample name | Mixture of 14.2 v% fine particles and ultraviolet-curable resin having nd of 1.528 | | | | | | | | | | | | | |
|---|---|---|---|---|---|---|---|---|---|---|---|---|---|---|---|
| | | State of ITO fine particles and reducing condition | | | ITO optical characteristics | | | | | Transmittance (for 10 µm) | | | | | |
| | | | | | | | | | | λ = 700 nm | | λ = 500 nm | | λ = 400 nm | |
| | | Sn/(Sn+In) | Unreduced | Reducing time (min) | nd | νd | θgF | | Wavelength at minimum refractive index (nm) | Transmittance | | Transmittance | | Transmittance | |
| COMPARATIVE EXAMPLE 1 | CHROMATIC ABERRATION CORRECTION OPTICAL MATERIAL B-1 | 8.0% | B | 200 | 1.565 | 20.2 | 0.42 | Excellent | 1565 | 79.8% | Poor | 87.8% | Poor | 78.9% | Poor |
| EXAMPLE 1 | CHROMATIC ABERRATION CORRECTION OPTICAL MATERIAL A-1 | 9.9% | A | 200 | 1.565 | 20.9 | 0.42 | Excellent | 1638 | 84.9% | Good | 92.5% | Good | 82.5% | Good |
| EXAMPLE 2 | CHROMATIC ABERRATION Correction OPTICAL MATERIAL B-2 | 8.0% | B | 140 | 1.568 | 20.8 | 0.42 | Excellent | 1663 | 85.1% | Good | 91.7% | Good | 82.6% | Good |
| EXAMPLE 4 | CHROMATIC ABERRATION CORRECTION OPTICAL MATERIAL C-1 | 6.8% | C | 140 | 1.568 | 21.3 | 0.42 | Good | 1698 | 86.9% | Excellent | 93.0% | Excellent | 84.6% | Excellent |
| EXAMPLE 3 | CHROMATIC ABERRATION CORRECTION OPTICAL MATERIAL B-3 | 8.0% | B | 120 | 1.569 | 21.8 | 0.43 | Good | 1793 | 88.3% | Excellent | 93.4% | Excellent | 83.7% | Excellent |
| COMPARATIVE EXAMPLE 2 | CHROMATIC ABERRATION CORRECTION OPTICAL MATERIAL B-4 | 8,0% | B | 100 | 1.576 | 23.9 | 0.46 | Poor | 2005 | 92.2% | Excellent | 94.7% | Excellent | 80.0% | Poor |

### EXAMPLE 5

### Preparation of optical material A-2

An optical material A-2 was prepared in the same manner as in EXAMPLE 1 by mixing 10.94 g of the ultraviolet-curable resin I prepared in EXAMPLE 1 with 140.58 g of the ITO-fine-particle-dispersed xylene solution (A-1-1) prepared in EXAMPLE 1.

### Evaluation of optical material A-2

### (1) Measurement of proportion of ITO fine particles

The proportion of indium tin oxide (ITO) fine particles in the optical material A-2 was measured in the same manner as in EXAMPLE 1. The proportion in the optical material A-2 was a weight fraction of 37.8 w% and it was a volume fraction of 10.1 v%.

### (2) Measurement of refractive index

A refractive index measurement sample was prepared in the same manner as in EXAMPLE 1. The sample was measured in terms of refractive indices and the optical characteristics were determined in the same manner as in EXAMPLE 1. The results are summarized in Table 2 below. The optical characteristics of the optical material A-2 were (nd, νd, θgF) = (1.555, 25.0±0.2, 0.43±0.02).

### (3) Measurement of transmittance

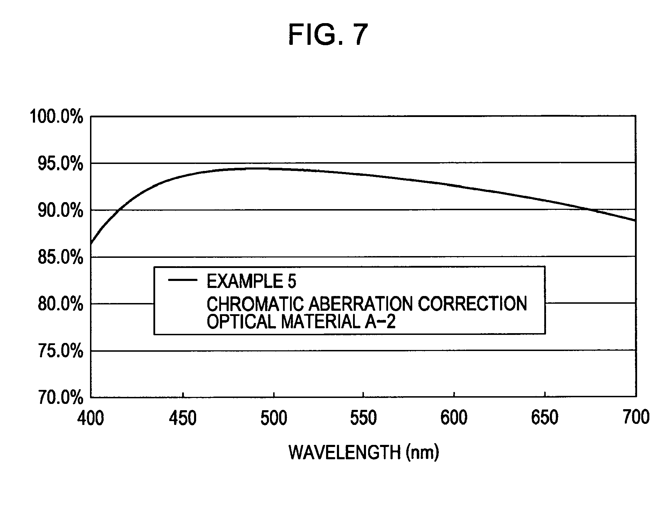

A transmittance measurement sample was prepared and measured in the same manner as in EXAMPLE 1. The internal transmittances of the optical material A-2 for a film thickness of 10 µm were determined from the transmittances and the film thickness. Fig. 7 illustrates the results. Specific values of the internal transmittances at the wavelengths of 700 nm, 500 nm, and 400 nm are summarized in Table 2 below. The transmittance (λ = 700 nm) was 88.9%; the transmittance (λ = 500 nm) was 94.5%; and the transmittance (λ = 400 nm) was 86.5%.

### (4) Measurement of wavelength that provides the minimum value of refractive index

A spectropolarimetric analysis sample of the optical material A-2 was prepared and the refractive indices of the sample in a long wavelength range of 600 nm to 2200 nm were calculated in the same manner as in EXAMPLE 1. The results are illustrated in Fig. 5. The wavelength at which the refractive index value was the lowest was determined with the graph in Fig. 5. The result is illustrated in Table 2 below. This wavelength was 1643 nm, which was within the range of 1600 nm or more and 1800 nm or less and was only 5 nm different from and substantially equivalent to 1638 nm in EXAMPLE 1. The minimum value of the refractive index was 1.387.

Thus, in the case of using the same indium tin oxide (ITO) fine particles, even when the proportion of the indium tin oxide (ITO) fine particles is changed, the wavelength that provides the minimum refractive index (dn/dλ = 0 and d²n/dλ² > 0) substantially does not vary.

**Table 2**

| | Sample name | Mixture of 10.2 v% fine particles and ultraviolet-curable resin having nd of 1.528 | | | | | | | | | | | | | |
|---|---|---|---|---|---|---|---|---|---|---|---|---|---|---|---|
| | | State of ITO fine particles and reducing condition | | | ITO optical characteristics | | | | | Transmittance (for 10 wm) | | | | | |
| | | | | | | | | | | λ = 700 nm | | λ = 500nm | | λ = 400nm | |
| | | Sn/(Sn+In) | Unreduced lot | Reducing time(min) | nd | νd | θgF | | Wavelength at minimum refractive index (nm) | Transmittance | | Transmittance | | Transmittance | |
| EXAMPLE 5 | CHROMATIC ABERRATION CORRECTION OPTICAL MATERIAL A-2 | 9.9% | A | 200 | 1.555 | 25.0 | 0.43 | Excellent | 1643 | 88.9% | Good | 94.5% | Good | 86.5% | Good |

### EXAMPLE 6

A multilayer diffraction grating 100 was produced with the optical material A-1 in EXAMPLE 1. Referring to Fig. 8, the high-refractive-index low-dispersion material 8 [a high-refractive-index low-dispersion material T1 (nd, νd, θgF) = (1.609, 44.6±0.4, 0.56±0.03)] corresponding to the optical characteristics of the optical material A-1 was formed on the glass 10 having a thickness of 2 mm. The optical material 9 (optical material A-1) was disposed on the high-refractive-index low-dispersion material 8. The glass 11 having a thickness of 2 mm was disposed on the optical material 9 such that the optical material 9 (optical material A-1) was pressed and made spread. Thus, a sample was prepared. This sample was irradiated with a high-pressure mercury-vapor lamp (EXECURE250, manufactured by HOYA CANDEO OPTRONICS CORPORATION) under conditions of 20 mW/cm² and 1000 seconds. Thus, the multilayer diffractive optical element was produced. As for the dimensions of the diffraction grating, height d1 was 13 µm and pitch X was 80 µm. Thickness d2 of the optical material 9 from the glass 11 to the grating and except for the grating was 5 µm.

### Evaluation of diffraction efficiency

The diffraction efficiency is the transmittance measured when a member on a substrate, the member being composed of the same resin as that of a diffractive optical element and having the same film thickness as that of the diffractive optical element, is subjected to luminous energy of the design order of the diffraction grating. The "same film thickness as that of a diffractive optical element" is the average film thickness (d2+d1/2) of the diffractive optical element.

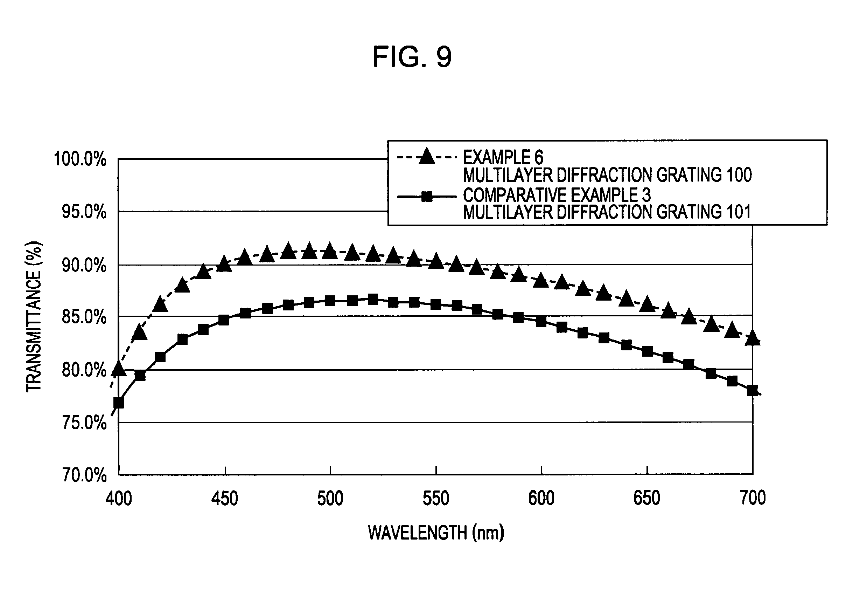

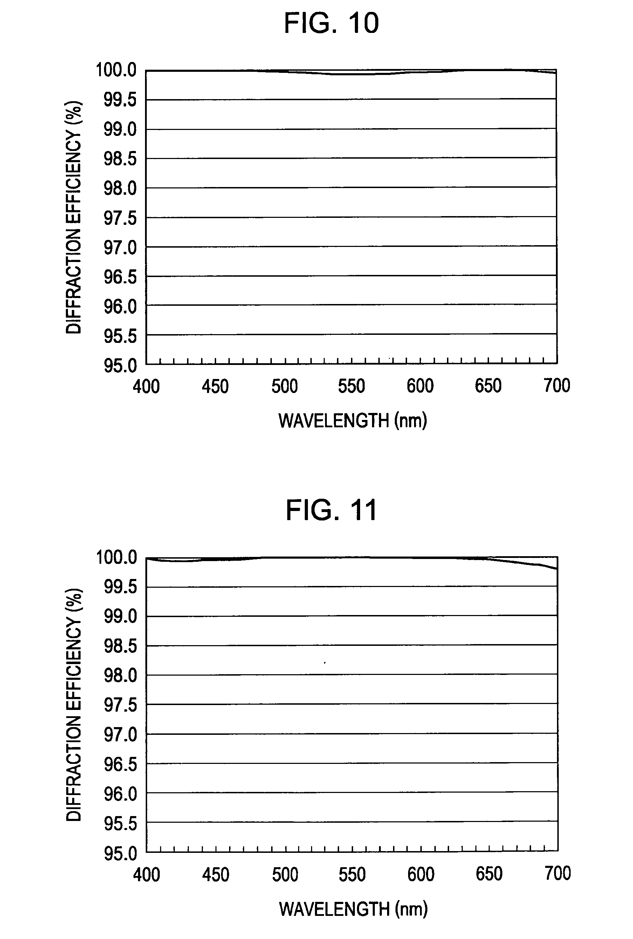

Fig. 9 illustrates the transmittances of the multilayer diffraction grating 100. Fig. 10 illustrates the diffraction efficiency of the multilayer diffraction grating 100. The diffraction efficiency was 99.9% or more over the entire visible region (λ = 400 to 700 nm). The transmittance (λ = 700 nm) was 82.9%; the transmittance (λ = 500 nm) was 91.4%; and the transmittance (λ = 400 nm) was 80.2%. Thus, the transmittances across the visible region are considered to be high.

### COMPARATIVE EXAMPLE 3

A multilayer diffraction grating 101 was produced with the optical material B-1 in COMPARATIVE EXAMPLE 1 in the same manner as in EXAMPLE 6. The multilayer diffraction grating 101 was produced with a high-refractive-index low-dispersion material T2 [(nd, vd, θgF) = (1.612, 44.4±0.4, 0.56±0.03)] that corresponded to the optical characteristics of the optical material B-1 and was slightly different from that in EXAMPLE 6.

As for the dimensions (height d1 and pitch X) of the diffraction grating, the height d1 was 12.2 µm and the pitch X was 80 µm. The thickness d2 of the optical material from the glass 11 to the grating and except for the grating was 5 µm.

### Evaluation of diffraction efficiency

The diffraction efficiency is the transmittance measured when a member on a substrate, the member being composed of the same resin as that of a diffractive optical element and having the same film thickness as that of the diffractive optical element, is subjected to luminous energy of the design order of the diffraction grating. The "same film thickness as that of a diffractive optical element" is the average film thickness (d2+d1/2) of the diffractive optical element. Fig. 9 illustrates the transmittances of the multilayer diffractive optical element 101. Fig. 11 illustrates the diffraction efficiency of the multilayer diffraction grating 101.

The diffraction efficiency was 99.9% or more over the entire visible region. However, the transmittance (λ = 700 nm) was 77.8%; the transmittance (λ = 500 nm) was 86.5%; and the transmittance (λ = 400 nm) was 76.9%. Thus, the transmittances were lower than those of EXAMPLE 6 by 5.0%, 4.8%, and 3.2%.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

## Claims

1. An optical material (9) comprising:
an optical resin; and
indium tin oxide (ITO) fine particles dispersed in the optical resin,
wherein, when a wavelength of light radiated into the optical material is represented by λ and a refractive index of the optical material radiated by the light of the wavelength λ is represented by n, the wavelength of light at which a relationship of dn/dλ = 0 and d²n/dλ² > 0 is satisfied is within a range of 1600 nm or more and 1800 nm or less.

2. The optical material according to Claim 1, wherein the ITO fine particles have an average particle size of 3 nm or more and 60 nm or less.

3. The optical material according to Claim 1, wherein, in the ITO fine particles, a proportion of tin atoms with respect to a total of indium atoms and the tin atoms is 3% or more and 15% or less.

4. The optical material according to Claim 1, wherein, a content of the ITO fine particles contained in the optical material is a volume fraction of 5% or more and 25% or less.

5. The optical material according to Claim 1, wherein the optical resin is a resin composed of monomers or oligomers that are curable by energy.

6. The optical material according to Claim 5, wherein the energy is ultraviolet light.

7. A multilayer diffractive optical element comprising:
a transparent substrate (10);
a first layer that is composed of an optical material (8), the first layer being formed on a surface of the transparent substrate and including a first diffraction grating structure formed on a surface of the first layer, the surface of the first layer being opposite the transparent substrate; and
a second layer that is composed of the optical material (9) according to Claim 1, the second layer including a second diffraction grating structure formed on a surface of the second layer,
wherein the first layer and the second layer are stacked onto each other such that the first diffraction grating structure faces the second diffraction grating structure, and
wherein the optical material of the first layer has a higher refractive index and a lower dispersion than the optical material of the second layer.
